# EUROPEAN PATENT APPLICATION

(11) **EP 3 340 140 A1**
(43) Date of publication of application: **27.06.2018**
(21) Application number: 16206455.4
(22) Date of filing: 22.12.2016
(51) Int. Cl.: G06Q 20/00

(54) **SYSTEM AND METHOD FOR FINANCIAL INSTRUMENT APPLICATIONS**

(71) Applicant: MASTERCARD INTERNATIONAL, INC., Purchase, NY 10577-2509 (US)
(72) Inventor: VANKAYALA, Suni, 530041 Andhra Pradesh (IN)
(74) Representative: FRKelly

(57) **Abstract**

Provided is a computer-implemented method for applying for a financial instrument, the method being performed by a mobile device and comprising operating a processor associated with the mobile device to: collate digital data associated with electronic copies of one or more physical documents; receive a user selection identifying a desired financial instrument; generate application data associated with the selected financial instrument for submission to a financial instrument vendor, wherein the application data includes at least some of the digital data associated with the electronic copies; and send to the financial instrument vendor the generated application data.

## Description

### Field of the Invention

The present disclosure relates to systems and methods for facilitating a financial instrument application procedure. More particularly, it relates to a method and system for facilitating a payment card application procedure such that an applicant does not have to input a large volume of information to a device as part of the application process.

### Background Of The Invention

A financial instrument such as a payment card is a device that enables its owner (the cardholder) to make a payment by electronic funds transfer. The most common types of payment cards are credit cards and debit cards but can also be charge cards, ATM cards, stored-value cards, feet cards etc.

A digital card, virtual card or cloud card is an online hosted, digital virtual representation of any plastic card or a generic identification method in IdM (Identity Management). A digital card, unlike a plastic card, does not require any physical representation in the first place as it is fully virtual and hosted online.

A digital card can emulate (imitate) any kind of plastic card but is mostly used with the aforementioned payment cards. Digital cards are usually stored on a smartphone or a smartwatch. Therefore, informational data from the card issuer can be transmitted (via Internet) and displayed, such as discounts, news updates, store locations, coupons, etc. Digital cards are often stored in a digital wallet refers to an electronic device that allows an individual to make electronic commerce transactions. This can include purchasing items on-line with a computer or using a smartphone to purchase something at a store.

In most countries, payment card application procedures with organisations such as banks are quite time consuming. This can be the case whether an applicant is applying for a physical card or digital card. The payment card applicant is required to fill up forms, attach relevant documents like passport etc., and provide references as part of the payment card application procedure. The applicant will then receive a physical/digital card a few weeks (or even months) later after the application documents have been processed reviewed and the application approved. In few cases users complain about agents/tellers not informing the cardholders about annual charges, membership fee, processing fee, benefits etc. at the time of applying for the payment card.

In view of the above, there are many situations where it is desirable to provide increased efficiency when applying for a payment card. In particular, it would be advantageous to configure a mobile device such as a smartphone to allow a user to complete an application process quickly and efficiently. An improved method for providing a financial instrument application procedure to a user, which addresses at least some of the drawbacks of the prior art would therefore be desirable.

### Summary of the Invention

The present disclosure provides a computer-implemented method as detailed in claim 1. Also provided are a computer-implemented medium according to claim 13, a system in accordance with claim 14 and client device in accordance with claim 15. Advantageous features are provided in dependent claims.

The present disclosure allows a user allows a user to securely apply for a financial instrument as well as making the application process simpler. The applicant may be able to receive a digitised financial instrument by just one click. A mobile application (or wallet) is provided with a feature to select any financial instrument offered and submit digital data associated with copies of required documents like passport, ID, driver license etc., input details like current employer, salary, current location, monthly income, dependents and any issuer specific criteria. If approved, the application is issued with a physical and/or digitized financial instrument. The digitized instrument may be provisioned onto their mobile device and used for contactless transactions.

Additionally users can query, research and compare financial instruments within the mobile application to decide which vendor product best suits their requirement and yield more benefits/rewards for usage. Upon selecting a financial instrument or product, the software application will show financial instrument details including joining bonus, annual charges, cash back/miles/points benefits, criteria to obtain the financial instrument etc.

Applicants will need to sign terms & conditions before provision of the financial instrument such as a digitized card, hence transparency of charges, fee and benefits is maintained.

### Brief Description of the Drawings

Figure 1 is a diagram of a system which is configured for performing an application procedure for a financial instrument according to embodiments of the present disclosure;
Figure 2 is a flow diagram illustrating a procedure for applying for a financial instrument according to an embodiment of the present disclosure; and
Figure 3 is a block diagram illustrating a configuration of a mobile device including various hardware and software components that function to perform the procedures according to embodiments of the present disclosure.

### Detailed Description

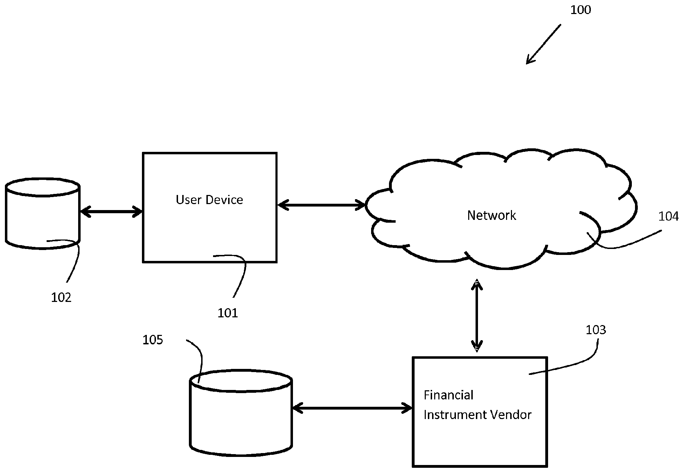

Referring to the drawings and, in particular to Figure 1, a system 100 including a user device 101 is shown connected to a database 102. The user device 101 may be a fixed or mobile device. The database 102 may be stored on the memory of the user device. Alternatively, the database 102 may be at a location separate from the user device 101 and accessed through a network or cloud services etc. As will be explained in more detail below, the database 102 is used to store information associated with a financial instrument applicant.

Figure 1 also shows the user device 101 communicating with a financial instrument vendor 103 (such as a payment card vendor) over a network 104. As the person skilled in the art is aware, any suitable communication network type may be used. The financial instrument vendor 103 accepts applications (application data) for financial instruments from the user device 101. In addition, the financial instrument vendor 103 processes the application data to determine if a financial instrument application (represented by the received application data) should be accepted or rejected. A notification of the acceptance or rejection of the application is sent back to the user device 101.

A central database 105 is connected to the financial instrument vendor 103 in order to facilitate processing of applications for financial instruments. The central database 105 contains financial instrument details including the requirements that must be met by an Applicant before a financial instrument is issued to an applicant. The vendor 103 may act as a broker having access to the application criteria of many financial instruments. The criteria of a plurality of financial instruments may be stored on the database 105. The vendor 103 may determine if an applicant meets the criteria for a financial instrument and if so, the application data received from the user device 101 is forwarded to a financial instrument issuer (such as a bank). The financial instrument issuer then provides the financial instrument to the user device 101 directly or through the vendor 103.

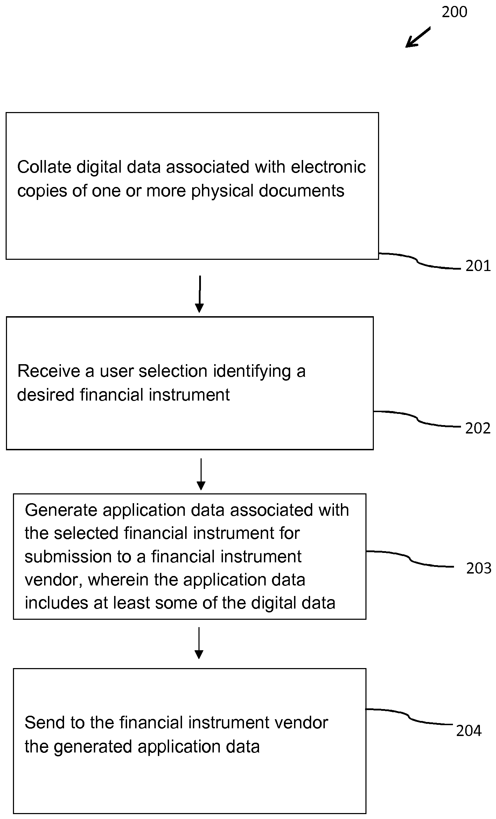

Fig. 2 illustrates a flow chart 200 with exemplary steps for effecting an application for a financial instrument (such as a payment card) in accordance with the present teaching. The method may comprise collating digital data associated with electronic copies of one or more physical documents, step 201; the mobile device receives a user selection identifying a desired financial instrument, step 202. Futhermore, the method may include generating application data associated with the selected financial instrument for submission to a financial instrument vendor, wherein the application data includes at least some of the digital data associated with the electronic copies, step 203. The method also includes sending to the financial instrument vendor 103 the generated application data, step 204.

The above outlined method makes the application procedure for a financial instrument much simpler and an applicant may receive a financial instrument (such as a physical card or digitized card) by just one click i.e., one user selection at the user device 101. In the "one click" scenario, an applicant/user simply inputs a user selection to the mobile device indicating the desired financial instrument. Step 201, collating digital data associated with electronic copies of one or more physical documents, may be performed at any time prior to the user selection. Accordingly, once the user inputs a selection of a financial instrument, the remaining steps 203 and 204 are carried out automatically.

The above outlined method may be implemented in a financial services app on the mobile/user device 101. The app (or wallet) may be provided with a feature such that a user can select any financial instrument available from a range of financial instrument vendors (such as banks). To complete the application procedure, the applicant usually has to submit electronic or physical copies of required documents like a passport, ID, driver license etc. Further details like current employer, salary information, current location, monthly income, payslips, dependents and any issuer specific criteria may need to be submitted before the financial instrument vendor is willing to issue a financial instrument to a user/applicant.

In the method in accordance with the present teachings, digital data associated with electronic copies of one or more physical documents is accessible to the mobile device i.e., held in database 102. That is, the data may be stored on the mobile device or at a remote location (e.g., cloud storage). In response to the user selection of the desired financial instrument, the mobile device/app running thereon may determine which digital data is required by the financial instrument vendor 103. If the required digital data is available to the mobile device, it is sent to the financial instrument vendor as part the generated application data.

The mobile app running on the user device 101 may provide addition functionality. Users can query, research and compare different financial instruments available from different vendors within the app to decide which instrument/product best suits their requirements and yields more benefits/rewards for usage. Upon selecting the financial instrument, the app will show details of the financial instrument including joining bonus, annual charges, cash back/miles/points benefits, criteria to obtain the financial instrument etc.

Turning again to Figure 2, a more detailed explanation of each step of the method in accordance with the present teachings is provided. In step 201, digital data associated with electronic copies of one or more physical documents is assembled or collated. This can involve the mobile device capturing an image of the physical document(s) (using a scanner or a camera built into the user device). The image is captured as digital data. The mobile device may also be provided with electronic copies of the physical document(s). For example, the user may have an electronic copy of the physical documents available, which is uploaded to the mobile device. The mobile device processes the electronic copy of the physical document to recognise the information held therein. For example, optical character recognition may be used to process the electronic copy of the physical document. All digital data associated with electronic copies of one or more physical documents is assembled or collated in database 102 accessible to the user device 101.

A plurality of financial instruments may be presented to the user at the user device 101. The user can select to apply for any of the instruments. Each financial instrument along with detailed information explaining the terms and conditions is displayed on the user device. The mobile device receives a user selection identifying a desired financial instrument step 202.

At step 203, the mobile device automatically generates application data associated with the selected financial instrument for submission to the financial instrument vendor 103, wherein the application data includes at least some of the digital data associated with the electronic copies.

A substep of step 203 may involve the user device 101 determining which digital data is required by the payment card vendor and generating application data with the required digital data.

A further substep of step 203 (generating the application data) may comprise the user device determining if the required digital data is available to the user device and if not available, providing an indication to the device user. That is, the user device 101 may display an error message indicating that the application procedure cannot continue as the user device 101 does not have access to the required digital information. The user may opt to upload the required digital information to the user device 101. For example, a copy of payslip from the preceding month may be required by the financial instrument vendor as part of the application procedure, and this may not be available to the mobile device. The user may be informed by the user device as to which information is missing to complete the application procedure and in response; the user makes the information available to the mobile device and completes the application procedure.

The user device or financial services application running thereon may be configured to analyse the digital data that has been collated. For example, physical documents for verifying applicant details are usually dated. These documents include passports, IDs, driver licenses, pay slips, proof of address (e.g., utility bill) bank statements etc. The financial services app analyses the stored/collated digital data associated with the electronic copies of the physical documents, reads the date of issuance of each document and associates a corresponding date stamp with each document. The date stamp may be stored in the database 102 as digital data associated with the physical documents. The app running on the user device will alert the user if a date stamp associated with one of the documents exceeds a predefined threshold e.g., if the document is more than 3 months old. The application on the user device may communicate with the financial instrument vendor to determine the criteria required for various financial instruments. For example, the mobile application may determine that payslips must not be more than 2 months old in order to apply for a financial instrument. As soon as a date stamp associated with a payslip indicates that the payslip is more than 2 months old, a notification is displayed to the user that the payslip is out of date and cannot be used to apply for at least one financial instrument. In this manner, the mobile device user can take steps to upload an up to date payslip. It will be appreciated that a payslip is merely exemplary and any physical document may be date stamped and monitored for expiration.

Accordingly, collating the digital data associated with electronic copies of physical documents includes attaching a digital signature associated with a respective electronic copy of the one or more physical documents, the digital signature having an expiry date.

The digital signature indicates to the user device whether the digital data associated with the physical document is valid.

Another substep of step 203 (generating application data) may include the user device 101 retrieving profile information for the applicant and sending the profile information to the vendor with the application data. That is, profile information (such as name, age, address etc.) may be accessible to the user device. The user will have inputted this profile information to the user device at a previous point in time and the profile information is then stored e.g., at database 102. The user may have to input confirmation that the correct profile information is being used by the user device as part of the application procedure. For increased security, a user may have to enter a PIN to the user device to ensure that they are not misrepresenting their identity. Each profile may have an associated PIN and unless the correct PIN is entered, the profile data will not be retrieved by the app.

The storage of profile information for the user and the subsequent submission of this profile information to the vendor 103 ensures a quicker and more efficient application procedure. In addition, the use of a PIN results in improved security.

Although not shown in Figure 2, the next step of the procedure involves the user device 101 receiving a response from the financial instrument vendor, the response indicating that the application has been approved, rejected or that a further credential is required. The further credential may include at least one of a digital signature, biometric identifier, personal identification number (PIN), IP address of the mobile device. Any further credential known to those skilled in the art may be used.

If the financial instrument vendor 103 determines that all the required application data has been received it may approve the user's application for the financial instrument. Accordingly, the user device is provided with a virtual financial instrument for residing thereon. For example, the user device may be provided with a virtual payment card for residing in a virtual wallet on the user device.

The virtual financial instrument may be associated with a credit card account, a debit card account, a checking account, a savings account, or a loyalty rewards account. As is known to those skilled in the art, the virtual financial instrument may be associated with any other type of account.

The virtual financial instrument may be mapped to a physical financial instrument. For example, the user may be provided with a physical payment card and a corresponding digital card. Both of these cards are linked to the same account and can be used for financial transactions with respect to the account.

The method 200 of Figure 2 may further comprise receiving a response from the vendor 103 indicating that a further procedure must be completed before the application can be approved. The further procedure includes at least one of an applicant making a telephone call to the financial instrument vendor; an applicant submitting a one time password to the financial instrument vendor; an applicant visiting the financial instrument with additional documents for verification.

Based on the application information provided by the user device to the vendor, the vendor may decide to reject the application (red path), approve the application (green path), approve with further authentication (yellow path) or request that the applicant visit a physical branch of the vendor (orange path).

The further authentication (yellow path) suggests to the applicant to either call the vendor (bank) for approval or authenticate with a one time password (OTP), via SMS or email or app push notification.

The request for the applicant to visit a physical branch (orange path) includes a request to bring additional documents for verification. For example, the vendor 103 may choose this path when the applicant's employer is not in a registered company list or the supplied documents are not adequate to take a decision upfront. The rejection of the application (red path) means that the applicant doesn't meet the requirements like salary etc., to provision the financial product from the specific vendor or financial institution. The mobile app running on the user device 101 may show suggestions that the applicant can acquire similar products from other vendors/financial institutions based on the application data provided.

If the vendor 103 approves an application for a financial instrument (green path), the cardholder will need to sign vendor or issuer Terms and Conditions (T&Cs). Upon agreement of T&Cs, card details will be generated by issuer and sent back in response, to the mobile application for provisioning and digitizing the card onto the app. For security reasons, the financial instrument may generate a token (virtual card) and map this token to a physical instrument (physical card). The token will then be sent back to mobile app for digitization and further can be used for contactless transactions.

There are a number of cardholder verification techniques that can be used for provisioned financial products e.g., Mobile PIN or touch id (if supported). MasterCard Digital Enablement Service (MDES) technology may be used for token generation, crypto security, mapping and card level management (suspend, resume, lost/stolen etc.). Contactless transactions with token will be mapped to real card transactions and sent across to issuer for authorization, adding more security to mobile wallet transactions.

Additional features of the mobile application running on the user device 103 include retrieving transaction history, card-level reporting and earnings, user controls on transactions, issuer specific mobile push notifications of new products that may benefit users and transactional alerts.

The teachings in accordance in with the present invention result in increased transparency on financial instrument vendors offerings to customers. There is a resultant reduced number of agents explaining to users product benefits, insurance etc. Digitizing cards onto mobile devices reduces costs of physical card embossing and dispatching.

The teachings in accordance with the present invention are further advantageous in that issuer specific mobile push notifications can be sent to a user reminding them of due dates, new products, minimum balance limit and similar alerts.

The ability to quickly and easily apply for a financial instrument such as a digital card using a mobile device leads to increased usage of digitized card over physical cards and cash.

Additionally users are able to query research and compare financial products that are available in market. After a mobile application has been issued with a financial instrument, the application running on the user device may be able to generate spending & earning reports for cardholders.

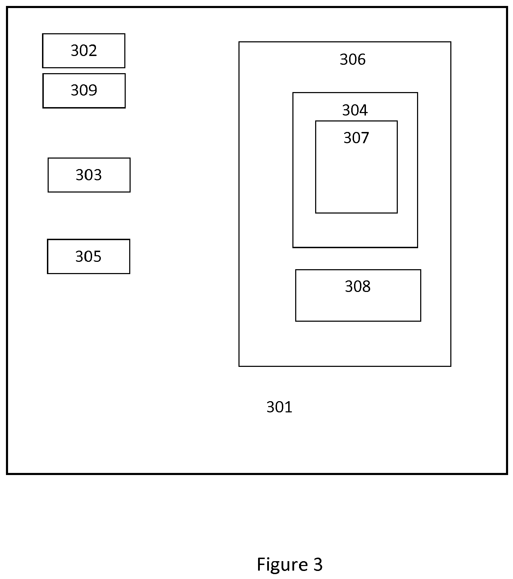

An exemplary smart phone that may function as the user device 101 is illustrated in Figure 3. The smart phone 301 includes various hardware and software components that function to perform the methods according to the present disclosure. The smart phone 301 comprises a user interface 302, a processor 303 in communication with a memory 304, and a communication interface 305. The processor 303 functions to execute software instructions that can be loaded and stored in the memory 304. The processor 303 may include a number of processors, a multi-processor core, or some other type of processor, depending on the particular implementation. The memory 304 may be accessible by the processor 303, thereby enabling the processor 303 to receive and execute instructions stored on the memory 304. The memory 304 may be, for example, a random access memory (RAM) or any other suitable volatile or non-volatile computer readable storage medium. In addition, the memory 304 may be fixed or removable and may contain one or more components or devices such as a hard drive, a flash memory, a rewritable optical disk, a rewritable magnetic tape, or some combination of the above.

One or more software modules 306 may be encoded in the memory 304. The software modules 306 may comprise one or more software programs or applications having computer program code or a set of instructions configured to be executed by the processor 303. Such computer program code or instructions for carrying out operations for aspects of the systems and methods disclosed herein may be written in any combination of one or more programming languages.

The software modules 306 may include one or more components of the previously described financial services (or financial vendor) application 307 and/or one or more additional applications configured to be executed by the processor 303. During execution of the software modules 306, the processor 303 configures the smart phone 301 to perform various operations relating to the effecting of the application for a financial instrument according to embodiments of the present disclosure.

Other information and/or data relevant to the operation of the present systems and methods, such as a database 308, may also be stored on the memory 304. The database 308 may contain and/or maintain various data items and elements that are utilized throughout the various operations of the financial services application 307. It should be noted that although the database 308 is depicted as being configured locally to the client device 301, in certain implementations the database 308 and/or various other data elements stored therein may be located remotely. Such elements may be located on a remote device or server - not shown, and connected to the client device 301 through a network in a manner known to those skilled in the art, in order to be loaded into a processor and executed.

Further, the program code of the software modules 306 and one or more computer readable storage devices (such as the memory 304) form a computer program product that may be manufactured and/or distributed in accordance with the present disclosure, as is known to those of skill in the art.

The communication interface 305 is also operatively connected to the processor 303 and may be any interface that enables communication between the smart phone 301 and external devices, machines and/or elements including the financial instrument vendor 103. The communication interface 305 is configured for transmitting and/or receiving data. For example, the communication interface 305 may include but is not limited to a Bluetooth, or cellular transceiver, a satellite communication transmitter/receiver, an optical port and/or any other such, interfaces for wirelessly connecting the smart phone 301 to the instrument vendor 103 or other third party device.

The user interface 302 is also operatively connected to the processor 303. The user interface may comprise one or more input device(s) such as switch(es), button(s), key(s), and a touchscreen. The user interface 302 functions to allow the entry of data. The user interface 302 functions to facilitate the capture of commands from the user such as an on-off commands or settings related to operation of the above-described method.

A display 309 may also be operatively connected to the processor 303. The display 309 may include a screen or any other such presentation device that enables the user to view various options, parameters, and results, such as the group identifiers. The display 309 may be a digital display such as an LED display. The user interface 302 and the display 309 may be integrated into a touch screen display. The operation of the client device 301 and the various elements and components described above will be understood by those skilled in the art with reference to the method and system for effecting a pre-paid redeemable transaction.

The present disclosure is not limited to the embodiment(s) described herein but can be amended or modified without departing from the scope of the present disclosure. Additionally, it will be appreciated that in embodiments of the present disclosure some of the above-described steps may be omitted and/or performed in an order other than that described.

## Claims

1. A computer-implemented method for applying for a financial instrument, the method being performed by a mobile device and comprising operating a processor associated with the mobile device to:
collate digital data associated with electronic copies of one or more physical documents;
receive a user selection identifying a desired financial instrument;
generate application data associated with the selected financial instrument for submission to a financial instrument vendor, wherein the application data includes at least some of the digital data associated with the electronic copies; and
send to the financial instrument vendor the generated application data.

2. The method of claim 1 wherein generating the application data comprises determining which digital data is required by the payment card vendor and generating application data with the required digital data.

3. The method of claim 2 wherein generating the application data comprises determining if the required digital data is available to the mobile device and if not available to mobile device, providing an indication to the mobile device user.

4. The method of any one of claims 1 to 3 wherein generating application data comprises retrieving profile information for the applicant and sending the profile information to the vendor with the application data.

5. The method of any one of claims 1 to 4 further comprising receiving a response from the vendor, the response indicating that the application has been approved, rejected or that a further credential is required.

6. The method of claim 5 wherein when the credential includes a digital signature, biometric identifier, personal identification number (PIN), IP address of the mobile device.

7. The method of claim 5 or 6 wherein on approval of the application the mobile device receives a virtual financial instrument for residing thereon.

8. The method of any one of claim 7 wherein the virtual financial instrument is associated with a credit card account, a debit card account, a checking account, a savings account, or a loyalty rewards account.

9. The method of claim 1 further comprising receiving a response from the vendor indicating that a further procedure must be completed before the application can be approved, wherein the further procedure includes at least one of:
an applicant making a telephone call to the financial instrument vendor;
an applicant submitting a one time password to the financial instrument vendor;
an applicant visiting the financial instrument with additional documents for verification.

10. The method of any one of claim 1 to 9 wherein collating the digital data includes attaching a digital signature associated with a respective electronic copy of the one or more physical documents, the digital signature having an expiry date.

11. The method of claim 10 wherein the digital signature indicates to the user device whether the digital data associated with the physical document is valid.

12. The method of any preceding claim, being implemented in a financial services application on the mobile device.

13. A computer-readable medium comprising non-transitory instructions which, when executed, cause a processor to carry out a method according to any one of claims 1 to 12.

14. A system for applying for a financial instrument; the system comprising one or more modules which are configured to:
collate digital data associated with electronic copies of one or more physical documents;
receive a user selection identifying a desired financial instrument;
generate application data associated with the selected financial instrument for submission to a financial instrument vendor, wherein the application data includes at least some of the digital data associated with the electronic copies; and
send to the financial instrument vendor the generated application data.

15. A client device being co-operable with a financial instrument vendor server for applying for a financial instrument; the client device comprising one or more modules which are configured to
collate digital data associated with electronic copies of one or more physical documents;
receive a user selection identifying a desired financial instrument; generate application data associated with the selected financial instrument for submission to a financial instrument vendor, wherein the application data includes at least some of the digital data associated with the electronic copies; and
send to the financial instrument vendor the generated application data.
